# EUROPEAN PATENT APPLICATION

(11) **EP 4 814 672 A1**
(43) Date of publication of application: **30.09.2026**
(21) Application number: 26168115.9
(22) Date of filing: 26.03.2026
(51) Int. Cl.: G06F 3/041, G02F 1/1333, G06F 1/32, G06F 1/3203, G06F 1/3234

(54) **TOUCH DRIVING DEVICE AND TOUCH DRIVING METHOD THEREOF**

(30) Priority: 27.03.2025 KR 20250039651
(71) Applicant: LX Semicon Co., Ltd., Daejeon 34027 (KR)
(72) Inventor: JUNG, Yeon Jae, 34027 Daejeon (KR)
(74) Representative: Goddar, Heinz J.

(57) **Abstract**

A touch driving device and a touch driving method thereof are disclosed. The touch driving device includes a sensing circuit including a plurality of multiplexers connected to a plurality of sensing lines; and a touch controller configured to receive an output signal of the sensing circuit and to calculate touch sensing coordinates, wherein the touch controller is configured to transmit a mode switching command for switching to an active mode to a timing controller when a valid touch signal is detected in an idle mode, and to operate in a full sensing mode to calculate touch sensing coordinates by receiving output signals from the plurality of multiplexers until the operation in the active mode starts.

## Description

### CROSS-REFERENCE TO RELATED APPLICATION

This application claims priority to and the benefit of Korean Patent Application No. 10-2025-0039651, filed March 27, 2025, the disclosure of which is incorporated herein by reference in its entirety.

### BACKGROUND

### Field

The present embodiment relates to a touch driving device with improved touch latency, a display device including the same, and a touch driving method thereof.

### Discussion of Related Art

In touch sensing systems, an in-cell driving method operates by time-dividing a display period and a touch interval using one touch synchronization signal per vertical synchronization signal. The in-cell driving method is a method of sensing according to the cycle of the vertical synchronization signal or the touch synchronization signal transmitted from a timing controller, and is divided into an active mode and an idle mode.

In the active mode, four long horizontal blank 4LHB intervals may be sensed per one frame, and a touch report may be transmitted after coordinate calculation. In the idle mode, 1LHB interval may be sensed per one frame, and the coordinate calculation and the touch report may not be transmitted.

When operating in an idle mode within firmware of a microcontroller unit (MCU) serving as a touch controller, a mode switching command is transmitted to the timing controller. Upon receiving the mode switching command, the timing controller switches the touch synchronization signal from the LHB mode to a vertical blanking sensing (VBS) mode.

When switching to the active mode within the MCU firmware upon the occurrence of the valid touch signal, a mode switching command is transmitted to the timing controller. In this case, the timing controller receiving the mode switching command should switch the touch synchronization signal from the VBS mode to the LHB mode.

However, when switching to the active mode within the MCU firmware upon the occurrence of a valid touch signal, even if the mode switching command is transmitted to the timing controller, the touch synchronization signal is delayed and does not switch to the LHB mode, and a VBS interval is maintained for a predetermined period. Furthermore, the MCU firmware may perform coordinate calculation and transmit a touch report only after the active mode sensing, that is, sensing of four LHB intervals per one frame, is completed.

When such situations occur, the sensing of the four LHB intervals in the active mode is delayed, which in turn delays the coordinate calculation and the touch report, thereby degrading latency performance.
The touch driving device or the display device may comprise any one, some or all of the features disclosed herein with respect to the touch driving method, unless indicated otherwise or technically inappropriate. The touch driving method may comprise any one, some or all of the features disclosed herein with respect to the touch driving device or the display device, unless indicated otherwise or technically inappropriate.

### SUMMARY

The present embodiment provides a touch driving device, a display device, and a touch driving method thereof, which are capable of calculating touch sensing coordinates and transmitting a touch report to a timing controller in a switching interval from an idle mode to an active mode.

The present embodiment provides a touch driving device, a display device, and a touch driving method thereof, which are capable of significantly reducing touch latency even in the switching interval from the idle mode to the active mode.

The present embodiment provides a touch driving device, a display device, and a touch driving method thereof, which enable curve drawing and straight drawing in a first touched area even in the switching interval from the idle mode to the active mode.

The present embodiment provides a touch driving device, a display device, and a touch driving method thereof, which enable a double-click at a first touch even in the switching interval from the idle mode to the active mode.

The objects of the present embodiments are not limited to the objects mentioned above, and other objects not mentioned will be clearly understood by those skilled in the art from the following description.

A touch driving device according to an embodiment of the present disclosure may include: a sensing circuit including a plurality of multiplexers connected to a plurality of sensing lines; and a touch controller configured to receive an output signal of the sensing circuit and to calculate touch sensing coordinates, wherein the touch controller may be configured to transmit a mode switching command for switching to an active mode to a timing controller when a valid touch signal is detected in an idle mode, and to operate in a full sensing mode to calculate touch sensing coordinates by receiving output signals from the plurality of multiplexers until the operation in the active mode starts.

A touch driving method according to an embodiment of the present disclosure may include: sensing, by a touch controller, a valid touch signal in an idle mode; transmitting a mode switching command for switching to an active mode to a timing controller; and operating in a full sensing mode to calculate touch sensing coordinates by receiving output signals from a plurality of multiplexers of a sensing circuit until the operation in the active mode starts.

According to the present embodiment, since the touch sensing coordinates may be calculated even during the switching interval from the idle mode to the active mode, a touch report may be transmitted to the timing controller.

According to the present embodiment, since the touch sensing coordinates may be calculated even during the switching interval from the idle mode to the active mode, touch latency may be significantly reduced.

According to the present embodiment, since the touch sensing coordinates may be calculated even during the switching interval from the idle mode to the active mode, curve drawing and straight drawing may be performed in the first touched area.

According to the present embodiment, since the touch sensing coordinates may be calculated even during the switching interval from the idle mode to the active mode, a double-click may be enabled at the first touch.

The effects of the present disclosure are not limited to the effects mentioned above, and other effects not mentioned will be clearly understood by those skilled in the art from the description of the claims.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a block diagram of a display device according to an embodiment of the present disclosure;
FIG. 2 is a block diagram of a touch driving device according to an embodiment of the present disclosure;
FIG. 3 is a schematic view for explaining the operation of the multiplexers connected to a display panel via a sensing line according to an embodiment of the present disclosure;
FIG. 4A is a signal waveform diagram comparing the operations in an idle mode and an active mode according to an embodiment of the present disclosure;
FIG. 4B is a signal waveform diagram comparing the operations in the idle mode and the active mode in the touch driving device for improving touch latency according to an embodiment of the present disclosure;
FIG. 5 is a schematic view illustrating a structure of a frame in the active mode according to an embodiment of the present disclosure;
FIG. 6 is a signal waveform diagram illustrating the operation in the active mode according to an embodiment of the present disclosure;
FIG. 7 is a schematic view illustrating a structure of a frame in the idle mode according to an embodiment of the present disclosure;
FIG. 8 is a signal waveform diagram illustrating the operation in the idle mode according to an embodiment of the present disclosure;
FIG. 9 is a schematic view illustrating a structure of a frame in a full sensing mode according to an embodiment of the present disclosure;
FIG. 10 is a signal waveform diagram illustrating the operation in the full sensing mode according to an embodiment of the present disclosure;
FIG. 11 is a flowchart illustrating a touch driving method in the active mode according to an embodiment of the present disclosure;
FIG. 12 is a flowchart illustrating the touch driving method in the idle mode according to an embodiment of the present disclosure; and
FIG. 13 is a flowchart illustrating the touch driving method in the full sensing mode according to an embodiment of the present disclosure.

### DETAILED DESCRIPTION OF EXEMPLARY EMBODIMENTS

The advantages and features of the present disclosure, and methods of achieving them will be apparent from the embodiments described in detail below in conjunction with the accompanying drawings. However, the present disclosure is not limited to the following embodiments, but may be implemented in various different forms; rather, the present embodiments are provided to make the description of the present disclosure complete and to allow those skilled in the art to fully understand the scope of the present disclosure, and the present disclosure is defined only within the scope of the appended claims.

The shapes, sizes, proportions, angles, numbers and the like shown in the accompanying drawings for the purpose of illustrating the embodiments of the present disclosure are merely examples, and the present disclosure is not limited thereto. Identical reference numerals may designate identical components throughout the description. Further, in describing the present disclosure, detailed descriptions of known related technologies may be omitted if it is considered to unnecessarily obscure the gist of the present disclosure. The terms such as "including," "having," and "consisting of" used herein are generally intended to allow other components to be added unless the terms are used with the term "only." References to components of a singular noun include the plural of that noun, unless specifically stated otherwise.

In the interpretation of components, they are construed to include margins of error, even if not explicitly stated.

When describing a positional relationship, for example, "on," "above," "below," or "next to" describes the positional relationship of two parts, one or more other parts may be located between the two parts, unless "immediately" or "directly" is used.

When describing a temporal contextual relationship is described, for example, such as "after," "following," "next to," or "before," it may also include non-contiguous cases unless "immediately" or "directly" is used.

As used herein, the term "part" may refer to a unit that processes at least one function or operation, such as a software or hardware component. The functions provided by the "part" may be performed separately by multiple components, or it may be integrated with other additional components. In this specification, the "part" may be implemented in a single circuit or in a plurality of circuits, or in a single device or in a plurality of devices.

Each of the features of various embodiments described herein may be coupled or combined with one another in whole or in part, and may be technologically interlocked and operated in various ways, and each of the embodiments may be carried out independently or in conjunction with one another.

The display device of the present embodiment may be implemented as a flat panel display device such as a liquid crystal display (LCD) device, an organic lightemitting diode display (OLED) device, and the like. In the following embodiments, a liquid crystal display device is described as an example of a flat panel display device, but the present disclosure is not limited thereto. For example, the display device of the present disclosure may be any display device to which in-cell touch sensor technology can be applied.

The touch sensor of the present embodiment may be implemented as a capacitive type touch sensor that can be embedded in a pixel array, for example, a mutual capacitance sensor or a self-capacitance sensor. Below, the touch sensor is described with a focus on a magnetic capacitance sensor, but this embodiment is not limited thereto.

The operation mode of the touch driving device may be divided into an active mode that detects a valid touch position of an object (stylus or finger) on a display panel and sense information transmitted by the object, an idle mode that detects a valid touch signal of the object on the display panel when initialized in a state in which no valid touch signal is detected, and a full sensing mode that detects a valid touch signal when the state is not abnormal.

In this case, the operation mode distinguished according to the touch sensing type may be expressed in various terms other than the active mode and the idle mode.

Hereinafter, various embodiments of the present disclosure will be described in detail with reference to the accompanying drawings.

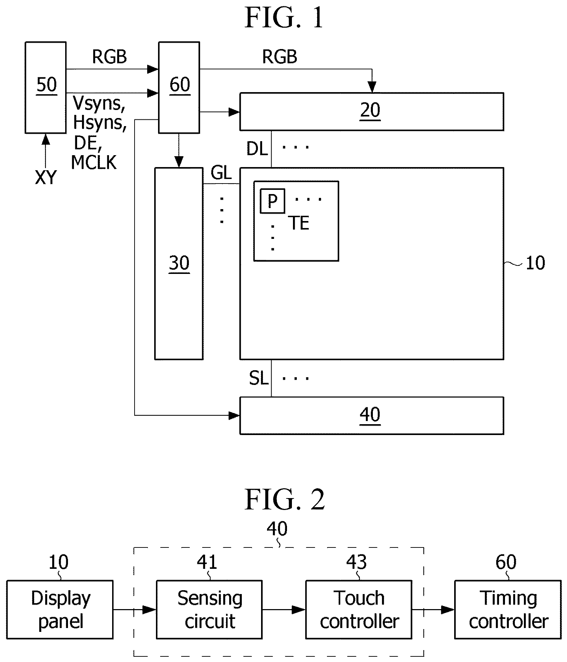

FIG. 1 is a block diagram illustrating a configuration of a display device according to an embodiment of the present disclosure.

Referring to FIG. 1, the display device includes a display panel 10, a data driving device 20, a gate driving device 30, a touch driving device 40, a host system 50, and a timing controller 60.

A plurality of data lines DL connected to the data driving device 20 and a plurality of gate lines GL connected to the gate driving device 30 may be formed on the display panel 10.

A plurality of pixels P corresponding to intersection points of the plurality of data lines DL and the plurality of gate lines GL may be defined on the display panel 10.

In each pixel P, a transistor may be formed in which a first electrode (e.g., a source electrode or a drain electrode) is connected to the data line DL, a gate electrode is connected to the gate line GL, and a second electrode (e.g., a drain electrode or a source electrode) is connected to a cathode electrode.

In the display panel 10, a plurality of touch electrodes TE may be further formed to be spaced apart from each other. A single pixel P or a plurality of pixels P may be positioned in an area where the touch electrode TE is positioned.

The display panel 10 may include a display panel and a touch panel (TSP). Here, the display panel and the touch panel may share some components with each other. For example, the plurality of touch electrodes TE may be a component of the display panel (e.g., a common electrode for applying a common voltage) and, at the same time, may be a component of the touch panel (a touch electrode for sensing a touch).

In view of the fact that some components of the display panel and the touch panel are shared with each other, such a display panel 10 may be defined as an integrated display panel. In addition, an in-cell type panel is known as a form in which some components of the display panel and the touch panel are shared with each other, but this is only an example of the above-described display panel 10, and the display panel 10 to which the present embodiment is applied is not limited to such an in-cell type panel.

The host system 50 may transmit digital video data RGB of an input image along with timing signals Vsync, Hsync, DE, and MCLK to the timing controller 60.

The host system 50 may execute an application program associated with coordinate information (XY) of a valid touch signal input from the touch driving device 40.

The timing controller 60 may control the operation timings of the data driving device 20, the gate driving device 30, and the touch driving device 40 by using timing signals such as a vertical synchronization signal Vsync, a horizontal synchronization signal Hsync, a data enable signal DE, and a main clock MCLK received from the host system 50 in synchronization with the data RGB of the input image. The timing controller 60 may generate a touch enable signal for defining a display period and a touch sensor driving period by using the input timing signals.

The display device according to the embodiment may employ a capacitive touch method configured to recognize the proximity or touch of an object by sensing a change in capacitance through the touch electrode TE.

The display device may drive the touch electrodes TE by dividing them into the display period and the touch sensing period. As an example, the touch driving device 40 of the display device may not apply a driving signal to all or some of the touch electrodes TE during an interval in which a data signal is supplied. However, the present embodiments are not limited thereto. For example, the display device may drive the touch electrodes TE without dividing the display period and the touch sensing period. The touch driving device 40 of the display device may apply a driving signal to all or some of the touch electrodes TE in the interval in which the data signal is supplied.

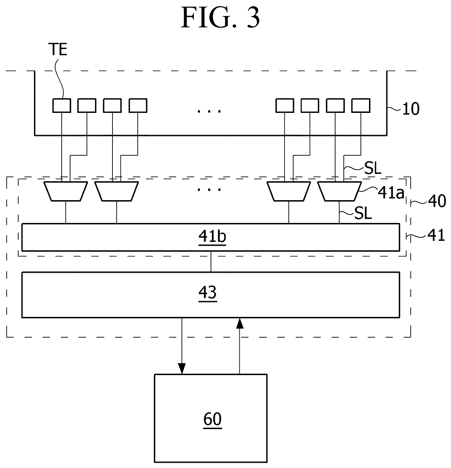

FIG. 2 is a block diagram of a touch driving device according to an embodiment of the present disclosure, and FIG. 3 is a schematic view for explaining the operation of a multiplexer connected to a display panel via sensing lines according to an embodiment of the present disclosure.

Referring to FIGS. 2 and 3, the touch driving device may include a sensing circuit 41 and a touch controller 43.

The sensing circuit 41 may include a plurality of multiplexers 41a connected to a plurality of sensing lines SL. The multiplexers 41a are connected to the touch electrodes TE in the display panel 10 and a switch array 41b through the sensing lines SL. The output signals of the multiplexer 41a are transmitted to the touch controller 43 by individual switches of the switch array 41b through the sensing lines SL.

The touch controller 43 may operate according to an active mode, an idle mode, and a full sensing mode. The touch controller 43 may receive signals from the plurality of multiplexers 41a by controlling the switch array 41b according to the active mode, the idle mode, and the full sensing mode. For example, in the active mode, the switch array 41b may be controlled to sequentially receive signals from three multiplexers 41a in each touch sensing period. In the idle mode, the switch array may be controlled to short five multiplexers together to receive signals at once. In the full sensing mode, the switch array 41b may be controlled to sequentially receive signals from all of the multiplexers 41a.

In the active mode, when a valid touch signal is present, the touch controller 43 may calculate touch sensing coordinates and transmit a touch report to the timing controller 60.

When there is no valid touch signal, the touch controller 43 may count active mode frames. When the count of the active mode frames is greater than a preset value, the touch controller 43 may operate in the idle mode. Here, if the count starts from 0 (an initialized state), the preset value may be 3,600. However, the present embodiments are not limited thereto.

The touch controller 43 may not calculate the touch sensing coordinates in the idle mode. In the idle mode, the touch controller 43 may sense whether the valid touch signal is detected by sensing output signals of n multiplexers (where n is a natural number). Here, the valid touch signal may be defined as a signal magnitude of a minimum standard modulated carrier wave required for a valid reception output.

When the valid touch signal is detected in the idle mode, the touch controller 43 may transmit a mode switching command for switching to the active mode to the timing controller 60.

However, even upon receiving the mode switching command, the timing controller 60 may maintain the touch synchronization signal of the idle mode for a predetermined period without immediately switching to the touch synchronization signal of the active mode.

According to an embodiment, the touch controller 43 may operate in the full sensing mode before operating from the idle mode to the active mode. The full sensing mode may be defined as a mode in which all touch signals are received from the multiplexers 41a in the sensing circuit 41 and touch coordinates are calculated before changing from the idle mode to the active mode.

The touch controller 43 may determine whether a point in time corresponds to an abnormal state while operating in the full sensing mode. The abnormal state may be defined as a state in which the full sensing mode should be switched to the active mode. For example, because the touch synchronization signal is switched to that of the active mode and a touch sensing period becomes shorter, a state in which it is difficult to receive touch signals from all multiplexers 41a may be defined as the abnormal state. The abnormal state may refer to a state in which a valid touch signal may not be detected because the touch synchronization signal rises during raw data sensing and is switched to a display period. The abnormal state may also be defined as a mode switching state or the like.

The touch controller 43 may continue to operate in the full sensing mode as long as it does not correspond to the abnormal state in the full sensing mode. Specifically, the touch controller 43 may determine whether a valid touch signal is detected when a point in time does not correspond to the abnormal state, and if a valid touch signal is not detected, the touch controller may determine again whether a point in time corresponds to the abnormal state. When a valid touch signal is detected, the touch controller 43 may calculate touch sensing coordinates from output signals received in the full sensing mode and transmit a touch report to the timing controller 60. After transmitting the touch report, the touch controller 43 may determine again whether a point in time corresponds to the abnormal state. The touch controller 43 operates in the active mode when the point in time corresponds to the abnormal state.

When the valid touch signal is detected in the idle mode, the touch controller 43 causes the plurality of multiplexers 41a to generate output signals at a point in time when sensing one long horizontal blank (1LHB) interval. Here, the 1LHB interval is within an interval until the touch synchronization signal corresponding to the idle mode is switched to the touch synchronization signal corresponding to the active mode. In this case, the timing at which the plurality of multiplexers 41a generate the output signals is during the time until the touch synchronization signal corresponding to the idle mode is switched to the touch synchronization signal corresponding to the active mode.

The timing controller 60 generates a mode control signal when: (i) in the active mode, the touch controller 43 transmits a mode change signal for the idle mode to the timing controller 60 in a state where the count of active mode frames is initialized; (ii) in the idle mode, when a valid touch signal is detected, the touch controller 43 transmits a mode change signal for the full sensing mode to the timing controller 60; and (iii) at a point in time corresponding to an abnormal state in the full sensing mode, the touch controller 43 transmits a mode change signal for the active mode to the timing controller 60.

In this case, even in the switching interval from the idle mode to the active mode in the timing controller 60, the touch controller 43 is operated in the full sensing mode to receive output signals of all the multiplexers 41a within one frame, thereby securing touch latency performance. Accordingly, even in the switching interval from the idle mode to the active mode, it is possible to perform curve drawing and straight drawing in a first touched area, as well as to enable a double-click at a first touch.

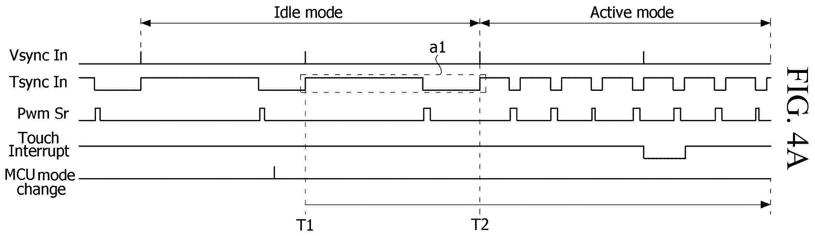

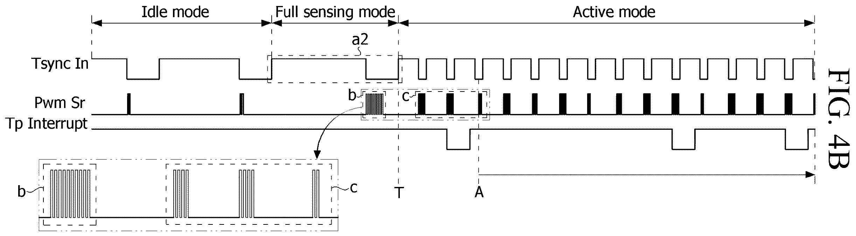

FIG. 4A is a signal waveform diagram comparing operations in the idle mode and the active mode according to an embodiment of the present disclosure, and FIG. 4B is a signal waveform diagram comparing operations in the idle mode and the active mode in a touch sensing device for improving touch latency according to an embodiment of the present disclosure.

Referring to FIG. 4A, the idle mode and the active mode may be distinguished according to a mode control signal (MCS) generated by the timing controller. T1 is a point in time when a valid touch signal is detected and a mode switching command is transmitted, and T2 is a point in time when the vertical blanking sensing (VBS) mode is switched to the long horizontal blank (LHB) mode.

Here, "Vsync In" is a vertical synchronization signal, and "Tsync In" is a touch synchronization signal. "Pwm Sr" is a PWM switching control signal, and Touch Interrupt is a touch interrupt signal. The MCU mode change is a mode change signal of a microcontroller unit (MCU).

The Touch Interrupt may be high when there is no touch and may be low when there is a touch. However, the present embodiments are not limited thereto. The Touch Interrupt may be low when there is no touch and may be high when there is a touch.

Upon switching from the idle mode to the active mode, the timing controller 60 receiving the mode switching command does not immediately change the touch synchronization signal Tsync In from the VBS mode to the LHB mode. Although the mode switching command to the active mode is received at the point T1 in time, it is switched from the idle mode to the active mode only at the point T2 in time after a delay of an interval al. In this case, the timing controller 60 may change the touch synchronization signal from the VBS mode to the LHB mode.

Therefore, the touch controller 43 may calculate touch sensing coordinates and transmit a touch report to the timing controller 60 only when the mode is changed to the active mode after a valid touch signal is detected. Thus, the delay in the interval al leads to a degradation in latency performance.

Referring to FIG. 4B, the operation may be divided into an idle mode, an active mode, and a full sensing mode according to a mode control signal (MCS) generated by the timing controller 60.

"T" is a point in time at which the full sensing mode is switched to the active mode, and A is a point in time at which the active mode sensing begins. Here, T refers to a point in time at which a rising edge of the touch synchronization signal occurs and it is switched to an abnormal state, and "A" refers to a point in time at which the reception of output signals from ten multiplexers is completed after switching to the active mode.

Here, "Tsync In" is a touch synchronization signal generated by a touch synchronization signal generator (not shown), "Pwm Sr" is a PWM switching control signal generated by a PWM generator (not shown), and "Tp Interrupt" is a touch interrupt signal generated by a touch interrupt signal generator (not shown).

The touch synchronization signal generator may be configured within the timing controller, and the PWM generator and the touch interrupt signal generator may be configured within the touch controller. The PWM generator and the interrupt signal generator receive the touch synchronization signal from the touch synchronization signal generator to generate a vertical synchronization signal, a PWM control signal, and an interrupt signal, respectively.

After operating in the full sensing mode, when the output of the touch synchronization signal Tsync In is low, the PWM switching control signal becomes high. The duty cycle of the pulse width is changed according to the PWM switching control signal. The Tp Interrupt becomes high when there is no touch and becomes low when there is a touch.

A delay occurs upon switching from the idle mode to the active mode, and full sensing is possible during the 1LHB interval. In "b" in FIG 4B, when the reception of all output signals from the ten multiplexers is completed, touch sensing coordinates may be calculated and a touch report may be transmitted to the timing controller. Accordingly, latency performance is secured even in an interval a2.

In FIG. 4A, since a time interval during which the touch synchronization signal is low is short, there is the interval al during which only the output signals of three multiplexers may be received from the multiplexers in the active mode. In contrast, in FIG. 4B, the system operates in the full sensing mode during the interval a2 of the idle mode to perform full sensing of the ten multiplexers during the 1LHB interval and then operates in the active mode, thereby improving latency performance. In FIG. 4A, "b" represents the full sensing output signals of the ten multiplexers during the 1LHB interval, and "c" represents the four, four, and two multiplexer output signals, respectively, when the touch synchronization signal is low.

In other words, in FIG. 4A, the active mode sensing is performed before switching from the idle mode to the active mode. However, in FIG. 4B, the full sensing mode is performed during the interval between the idle mode and the active mode, and the active mode sensing is performed after switching to the active mode.

Therefore, in FIG. 4A, only the output signals of three multiplexers may be received when the touch synchronization signal is low in the active mode. However, in FIG. 4B, the output signals of the ten multiplexers (b, ten in total) may all be received within one frame interval even during the switching interval from the idle mode to the active mode. In this way, according to the present embodiment, the touch latency may be significantly reduced, thereby enabling curve drawing and straight drawing in a first touched area, and a double-click at the first touch.

According to an embodiment, a touch sensing period in the full sensing mode may be different from the touch sensing period in the active mode. The touch sensing period may be defined as a period during which the touch synchronization signal is low. The touch sensing period in the full sensing mode may be the same as the touch sensing period in the idle mode.

The number of output signals of multiplexers received during the touch sensing period of the full sensing mode may be greater than the number of output signals of multiplexers received during the touch sensing periods of the idle mode and the active mode. For example, while the output signals of the ten multiplexers are received during the touch sensing period of the full sensing mode, output signals of one, three, or four multiplexers may be received in each touch sensing period of the active mode.

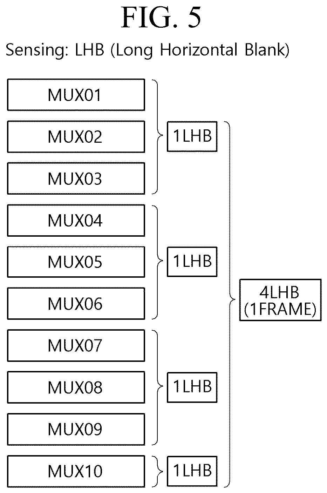

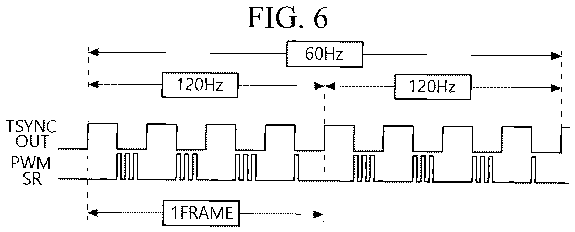

FIG. 5 is a schematic view illustrating a structure of a frame in the active mode according to an embodiment of the present disclosure, and FIG. 6 is a signal waveform diagram illustrating the operation in the active mode according to an embodiment of the present disclosure.

Referring to FIG. 5, in the active mode, ten multiplexers MUX 01, MUX 02, MUX 03, MUX 04, MUX 05, MUX 06, MUX 07, MUX 08, MUX 09, and MUX 10 are turned on during one frame interval. The MUX 01, MUX 02, and MUX 03 are turned on during the 1LHB interval, the MUX 04, MUX 05, and MUX 06 are turned on during another 1LHB interval, the MUX 07, MUX 08, and MUX 09 are turned on during yet another 1LHB interval, and the MUX 10 is turned on during the remaining 1LHB interval. As such, one frame interval may include four LHB intervals.

The multiplexer may be connected to the display panel through a sensing line to generate an output signal of the sensing line at a timing of sensing the one long horizontal blank (1LHB) interval.

When the output of the touch synchronization signal is low within one frame interval, a PWM generator generates a PWM switching control signal at different cycles of the output of the touch synchronization signal for each LHB interval (see FIG. 6).

Referring to FIG. 6, it may be seen that the output of the touch synchronization signal occurs for four cycles within one frame interval having a frequency of 120 Hz, and after one frame interval, the same output of the touch synchronization signal occurs again within the next frame interval.

Within one frame, when the outputs of the first to fourth touch synchronization signals are low, a pulse width modulation (PWM) switching control signal Pwm Sr is generated, during which 3, 3, 3, and 1 pulses are respectively produced.

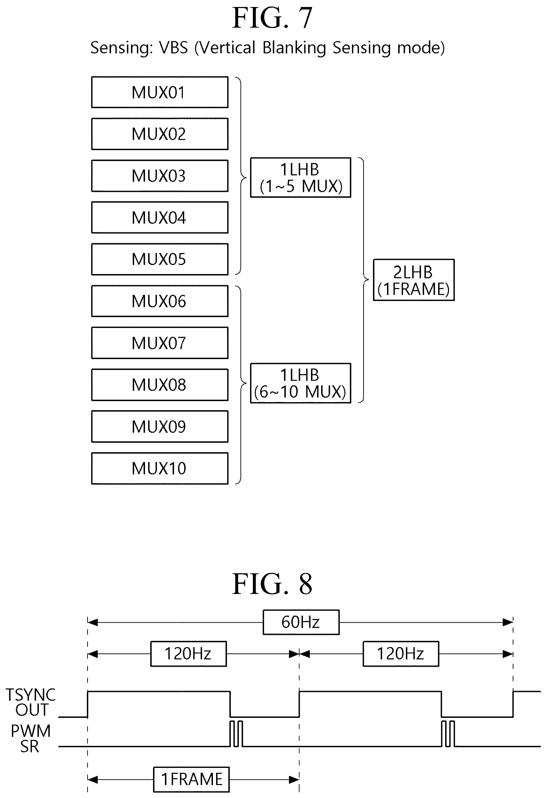

FIG. 7 is a schematic view illustrating a structure of a frame in the idle mode according to an embodiment of the present disclosure, and FIG. 8 is a signal waveform diagram illustrating the operation in the idle mode according to an embodiment of the present disclosure.

Referring to FIG. 7, in the idle mode, the ten multiplexers MUX 01, MUX 02, MUX 03, MUX 04, MUX 05, MUX 06, MUX 07, MUX 08, MUX 09, and MUX 10 are turned on during one frame interval. The MUX 01, MUX 02, MUX 03, MUX 04, and MUX 05 are turned on during the 1LHB interval, and the MUX 06, MUX 07, MUX 08, MUX 09, and MUX 10 are turned on during another 1LHB interval. As such, one frame interval may include two LHB intervals.

When the output of the touch synchronization signal is low within one frame interval, the PWM control signal may be generated as many as the number of LHB intervals (see FIG. 8).

Referring to FIG. 8, it may be seen that within one frame interval having a frequency of 120 Hz, the output of the touch synchronization signal TSYNC OUT occurs for one cycle, and after one frame interval, the same output of the touch synchronization signal occurs again within the next frame interval.

When the output of the touch synchronization signal is low within one frame interval, the pulse width modulation (PWM) switching control signal Pwm Sr is generated, where two pulses are produced.

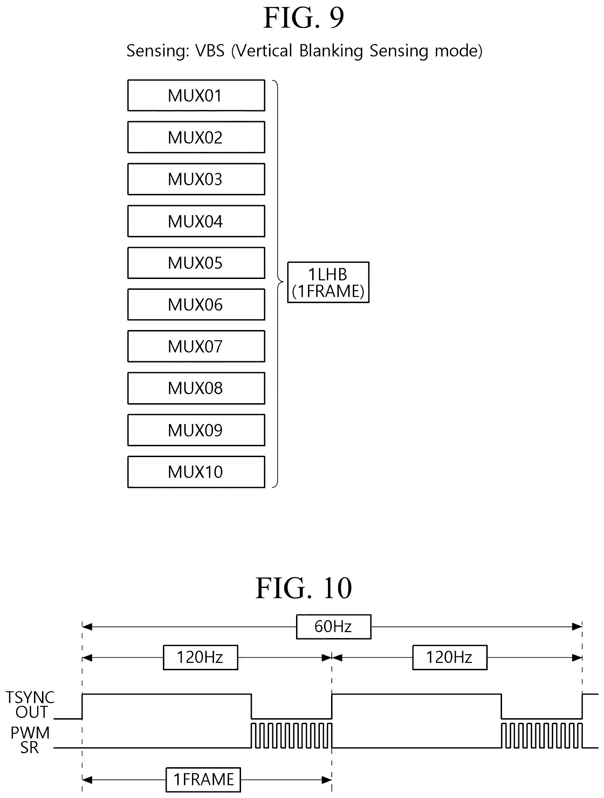

FIG. 9 is a schematic view illustrating a structure of a frame in the full sensing mode according to an embodiment of the present disclosure, and FIG. 10 is a signal waveform diagram illustrating the operation in the full sensing mode according to an embodiment of the present disclosure.

Referring to FIG. 9, in the full sensing mode, the ten multiplexers MUX 01, MUX 02, MUX 03, MUX 04, MUX 05, MUX 06, MUX 07, MUX 08, MUX 09, and MUX 10 are turned on during one frame interval, and the ten multiplexers are turned on during a single 1LHB interval.

When the output of the touch synchronization signal is low within one frame interval, the PWM switching control signals are generated as many as the number of multiplexers (see FIG. 10).

Referring to FIG. 10, it may be seen that within one frame interval having a frequency of 120 Hz, the output of the touch synchronization signal TSYNC OUT occurs for one cycle, and after one frame interval, the same output of the touch synchronization signal occurs again within the next frame interval.

Within one frame interval, when the output of the touch synchronization signal is low, a pulse width modulation (PWM) switching control signal Pwm Sr is generated, during which ten pulses are respectively produced.

In FIGS. 6, 8, and 10, the touch synchronization signal is generated by a touch synchronization signal generator (not shown), and the PWM switching control signal may be generated by a PWM signal generator (not shown). The PWM switching control signal is generated only when the output of the touch synchronization signal is low (when there is a touch input), and the duty cycle of the pulse width is changed according to the PWM switching control signal.

In the full sensing mode, the PWM control signals as many as the number of multiplexers are continuously generated within one frame (1LHB) interval, thereby improving touch latency performance by operating in the full sensing mode even when operating in the idle mode.

A touch driving method according to an embodiment of the present disclosure includes: sensing, by the touch controller 43, a valid touch signal in an idle mode; transmitting a mode switching command for switching to an active mode to the timing controller 60; and operating in a full sensing mode to calculate touch sensing coordinates by receiving output signals from the plurality of multiplexers 41a of the sensing circuit 41 until the operation in the active mode starts. After transmitting the mode switching command for switching to the active mode to the timing controller 60, the touch controller 43 receives output signals from the plurality of multiplexers 41a in the full sensing mode.

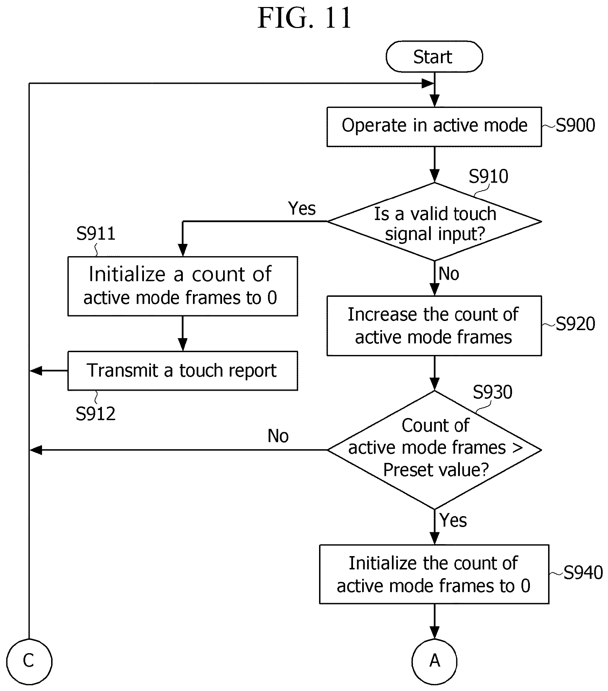

Hereinafter, the touch driving method according to an embodiment of the present disclosure will be described in detail with reference to FIGS. 11 to 13.

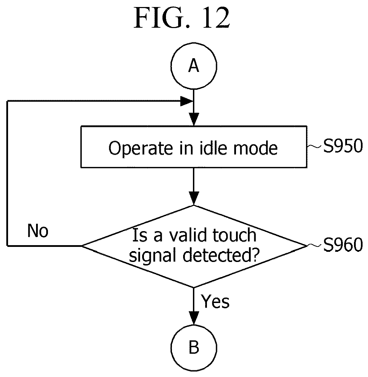

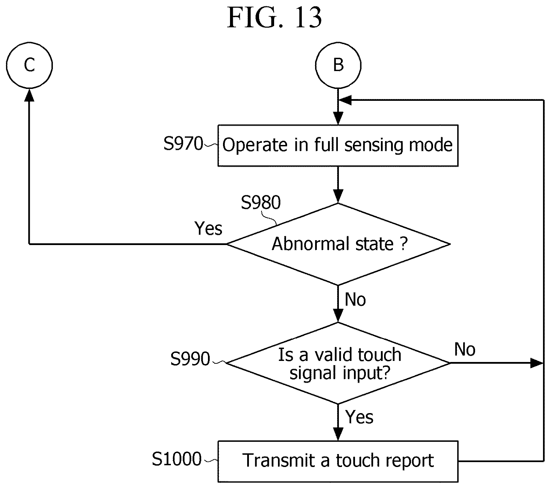

FIG. 11 is a flowchart illustrating an active mode in a touch sensing method according to an embodiment of the present disclosure, FIG. 12 is a flowchart illustrating an idle mode in the touch sensing method according to an embodiment of the present disclosure, and FIG. 13 is a flowchart illustrating a full sensing mode in the touch sensing method according to an embodiment of the present disclosure.

Referring to FIGS. 11 to 13, the touch sensing method may include steps S900 to S1000. Here, FIGS. 11 to 13 represent a single flow, but the drawings are separated for convenience, and A, B, and C are connection points between the drawings.

First, the touch controller 43 operates in the active mode (S900) and determines whether a valid touch signal is present on the display panel 10 (S910).

In step S910, if no valid touch signal is present, the touch controller 43 increases a count of active mode frames (S920). However, if the valid touch signal is present in step S910, the touch controller 43 initializes the count of active mode frames to 0 (S911) and then calculates touch sensing coordinates to transmit a touch report to the timing controller 60 (S912). After step S912, step S900 is performed.

After step S920, the touch controller 43 may determine whether the count of active mode frames is greater than a preset value (S930).

In step S930, if the count of the active mode frames is greater than the preset value, the touch controller 43 may initialize the count of the active mode frames to 0 (S940). However, if the count of the active mode frames is not greater than the preset value in step S930, step S900 is performed.

After step S940, the touch controller 43 operates in the idle mode (S950) and may determine whether a valid touch signal is detected (S960). In this case, the touch controller 43 receives output signals of n multiplexers (where n is a natural number) in the idle mode.

In step S960, if a valid touch signal is detected, the touch controller 43 may operate in the full sensing mode (S970) and may determine whether a point in time corresponds to an abnormal state (S980). However, if the valid touch signal is not detected in step S960, step S950 is performed.

In step S980, if a point in time does not correspond to the abnormal state, the touch controller 43 may determine whether the valid touch signal is detected on the display panel 10 (S990).

However, if a point in time corresponds to the abnormal state in step S980, the touch controller 43 may skip a full sensing mode frame to perform step S900.

In step S990, if the valid touch signal is detected, the touch controller 43 receives output signals from the plurality of multiplexers through sensing lines on the display panel 10, and then calculates touch sensing coordinates to transmit a touch report to the timing controller 60 (S1000). In this case, the touch controller 43 receives output signals from more than n multiplexers and calculates the touch sensing coordinates.

After step S1000, the touch controller 43 may operate in the full sensing mode (S970). The plurality of multiplexers generate output signals at a timing of sensing one long horizontal blank (1LHB) interval. Here, the 1LHB interval is within an interval until a touch synchronization signal corresponding to the idle mode is switched to a touch synchronization signal corresponding to the active mode. In step S990, if the valid touch signal is not detected, step S970 may be performed.

Although the embodiments of the present disclosure have been described in more detail with reference to the accompanying drawings, the present disclosure is not necessarily limited to such embodiments, and may be variously modified within the scope thereof without departing from the technical spirit of the present disclosure. Therefore, the embodiments disclosed in the present disclosure are provided for illustrative purposes only and are not intended to limit the technical concept of the present disclosure, and the scope of the technical concept of the present disclosure is not limited thereto. Therefore, it should be understood that the embodiments described above are illustrative in all aspects and do not limit the present disclosure. The scope of protection of the present disclosure should be construed on the basis of the following claims, and all technical concepts within the equivalent scope thereof should be construed as falling within the scope of the present disclosure.

### [List of Reference Numbers]

| | | | |
|---|---|---|---|
| 10: | Display panel | 20: | Data driving device |
| 30: | Gate driving device | 40: | Touch driving device |
| 41: | Sensing circuit | 41a: | Multiplexer |
| 41b: | Switch array | 43: | Touch controller |
| 50: | Host system | 60: | Timing controller |

## Claims

1. A touch driving device comprising:
a sensing circuit including a plurality of multiplexers connected to a plurality of sensing lines; and
a touch controller configured to receive an output signal of the sensing circuit and calculate touch sensing coordinates,
wherein the touch controller is configured to transmit a mode switching command for switching to an active mode to a timing controller when a valid touch signal is detected in an idle mode, and to operate in a full sensing mode to calculate touch sensing coordinates by receiving output signals from the plurality of multiplexers until the operation in the active mode starts.

2. The touch driving device of claim 1, wherein the touch controller is configured to determine whether a point in time corresponds to an abnormal state in the full sensing mode when the valid touch signal is detected, and to operate in the active mode when the point in time corresponds to the abnormal state.

3. The touch driving device of claim 2, wherein the abnormal state is a state in which a valid touch signal cannot be detected because a touch synchronization signal rises during sensing in the full sensing mode, thereby switching to a display period.

4. The touch driving device of any one of the preceding claims, wherein a touch sensing period in the full sensing mode is different from a touch sensing period in the active mode.

5. The touch driving device of any one of the preceding claims, wherein a touch sensing period in the full sensing mode is the same as a touch sensing period in the idle mode.

6. The touch driving device of any one of the preceding claims, wherein the number of output signals of multiplexers received during the touch sensing period of the full sensing mode is greater than the number of output signals of multiplexers received during the touch sensing period of the active mode.

7. The touch driving device of any one of the preceding claims, wherein the touch controller is configured to initialize a count of active mode frames if the valid touch signal is present in the active mode, and to calculate the touch sensing coordinates to transmit a touch report to the timing controller in the active mode.

8. The touch driving device of any one of the preceding claims, wherein the touch controller is configured to increase a count of active mode frames if no valid touch signal is present in the active mode, and to operate in the idle mode after initializing the count of the active mode frames when the count of the active mode frames is greater than a preset value.

9. The touch driving device of any one of the preceding claims, wherein the touch controller is configured to determine whether a valid touch signal is detected when a point in time does not correspond to the abnormal state in the full sensing mode, and to determine whether the point in time corresponds to the abnormal state if the valid touch signal is not detected.

10. The touch driving device of claim 8 or 9, wherein the touch controller is configured to transmit the mode switching command for switching to the active mode to the timing controller and to receive output signals from the plurality of multiplexers in the full sensing mode.

11. A touch driving method comprising:
sensing, by a touch controller, a valid touch signal in an idle mode;
transmitting a mode switching command for switching to an active mode to a timing controller; and
operating in a full sensing mode to calculate touch sensing coordinates by receiving output signals from a plurality of multiplexers of a sensing circuit until the operation in the active mode starts.

12. The touch driving method of claim 11, further comprising:
determining, by the touch controller, whether a point in time corresponds to an abnormal state in the full sensing mode when the valid touch signal is detected; and
operating, by the touch controller, in the active mode when the point in time corresponds to the abnormal state in the full sensing mode.

13. The touch driving method of claim 11 or 12, further comprising:
initializing, by the touch controller, a count of active mode frames when the valid touch signal is present in the active mode; and
calculating, by the touch controller, the touch sensing coordinates to transmit a touch report to the timing controller in the active mode.

14. The touch driving method of any one of claims 11 to 13, wherein, when no valid touch signal is present in the active mode, the touch controller increases a count of active mode frames, and operates in the idle mode after initializing the count of the active mode frames when the count of the active mode frames is greater than a preset value.

15. The touch driving method of any one of claims 12 or 14, further comprising:
determining, by the touch controller, whether a valid touch signal is detected when the point in time does not correspond to the abnormal state in the full sensing mode, and
performing the determining whether the point in time corresponds to the abnormal state if the valid touch signal is not detected.
